# FASCICULE DE BREVET EUROPEEN

(11) **EP 0 586 318 B1**
(45) Date de publication et mention de la délivrance du brevet: **19.03.1997**
(21) Numéro de dépôt: 93440070.6
(22) Date de dépôt: 01.09.1993
(51) Int. Cl.: B60P 3/08, B65D 88/12

(54) **Plancher double mixte transformable en une structure porte-véhicules pour unité de transport**
Umstellbarer, doppelter Boden für Kraftfahrzeuge in einer Transporteinheit
Transformable double floor for motor vehicles in a transport unit

(30) Priorité: 03.09.1992 FR 9210675
(43) Date de publication de la demande: 09.03.1994
(73) Titulaire: LOHR INDUSTRIE, F-67980 Hangenbieten (FR)
(72) Inventeur: André, Jean-Luc, F-67210 Obernai (FR)
(74) Mandataire: Metz, Paul

(56) Documents cités:
- DE-U- 9 000 519
- GB-A- 2 050 304
- US-A- 1 965 525
- US-A- 1 978 287
- US-A- 4 917 557

## Description

La présente invention se rapporte à une Structure porteuse transformable du type à deux plans porteurs à incorporer dans une unité de transport par exemple fermée, conteneur, caisse mobile, remorque, ou autre pour le transport alternatif ou mixte de véhicules et de marchandises.

Les véhicules porte-voitures et plus généralement porte-véhicules ont atteint un niveau de performances intéressant, autant par leur capacité de transport que par leur automatisation et vitesse de chargement/déchargement.

Les constructeurs s'efforcent d'améliorer encore les possibilités des porte-véhicules en vue de gagner en temps et en capacité.

Deux problèmes restent cependant totalement ou partiellement sans solution. Il s'agit, d'une part, de la protection des véhicules contre les intempéries et plus généralement contre les agressions extérieures, et d'autre part, du retour à vide.

Il existe des conteneurs dans lesquels sont montés sur des supports un ou plusieurs véhicules pour leur transport.

Ces conteneurs tels que ceux exposés ci-après sont dédiés au transport de véhicules. Les structures supportant les véhicules s'avèrent hautement spécialisées et destinées uniquement à ce but.

Aucune caractéristique ne permet leur transformation en vue d'un autre type de transport.

On connaît ainsi un certain nombre de dispositifs associés à des conteneurs ou indépendants, permettant d'augmenter leur capacité.

Par exemple, on a imaginé de disposer un plancher horizontal intermédiaire divisant le conteneur en deux étages superposés, le plancher étant éventuellement réglable en hauteur de façon à pouvoir obtenir des étages de hauteurs différentes.

Le brevet EP 318961 du 30 novembre 88 décrit une telle installation dans laquelle le plancher est intégré au conteneur, et le dépôt international WO 90/11911 du 4 avril 89 décrit une autre installation, où la structure support est indépendante.

Afin de diminuer les espaces morts, d'autres installations ont prévu d'articuler le plancher supérieur à une extrémité afin de pouvoir le faire pivoter, soit vers le bas, par exemple le brevet US n° 4,911,590 du 27 mars 1990, de façon à former une rampe de chargement, soit vers le haut, par exemple le brevet US n°4,917,557 du 17 avril 1990.

Les unités de transport équipées de ces dispositifs ne sont pas adaptables au transport d'autres marchandises, à moins de démonter ou d'enlever la structure de base intérieure.

Par ailleurs, ces dispositifs présentent outre leur spécificité prononcée l'inconvénient de n'être inclinables qu'à une seule de leur extrémité, l'autre restant à hauteur fixe.

D'autre part, ils mettent généralement en oeuvre une structure de base soutenant le plateau supérieur volumineuse, lourde et malcommode d'usage, notamment lors des manoeuvres de chargement/déchargement.

Egalement, du fait même de la présence de cette structure fixe, les possibilités de réduction des espaces morts sont limitées, l'adaptation ne se faisant que verticalement par le pivotement du plancher supérieur.

L'invention remédie à ces inconvénients par un conteneur de transport à usages multiples comprenant un plancher mobile mixte transformable en structure porte-véhicules.

A cet effet, le plancher double mixte selon l'invention est mobile en translation longitudinale dans une unité de transport et est formé d'un plateau porte-véhicules inférieur et d'un support-plan supérieur, ce plancher mixte comprenant à proximité de chacune de ses extrémités un moyen de soutien pour le support-plan intégré ou associé à un moyen de levage, ces moyens de levage et de soutien étant réglables indépendamment. Le support-plan supérieur est constitué de préférence d'une rampe porte-véhicule et d'une rampe d'extrémité articulées entre elles à pliage par une articulation de pivotement soutenue en appui et permettant le basculement de la rampe porte-véhicule en position levée en vue de délimiter un espace disponible pour un deuxième véhicule entre le support-plan supérieur et le plateau inférieur.

L'avantage principal de l'invention est de pouvoir utiliser indifféremment pour le transport de véhicules et de marchandises un plancher supérieur universel.

Un des avantages de l'invention est de permettre une utilisation maximale de l'espace intérieur d'un conteneur en permettant une adaptation en hauteur et en inclinaison du plancher supérieur.

Un autre avantage porte sur l'espace restreint occupé par le dispositif en position abaissée permettant le transport de fret de façon tout à fait conventionnelle.

Un avantage supplémentaire porte sur la possibilité d'optimiser l'espace disponible sous le support-plan supérieur en fonction de la forme et des dimensions de l'extrémité avant du modèle de véhicule à transporter.

Egalement, le chargement, soit de fret, soit de véhicules, est rendu aisé grâce au plancher mobile, à la simplicité des manipulations nécessaires et à la possibilité d'utiliser des moyens de chargement habituels.

Pour les constructeurs de véhicules, l'unité de transport, par exemple un conteneur ainsi équipé, permet, lors du trajet aller, de livrer des véhicules et lors de son retour, de transporter des pièces détachées entrant dans la fabrication des véhicules, et par conséquent, de justifier pleinement sa rentabilité dans une logistique en flux tendu.

Finalement, de par les caractéristiques constructives, il existe un espace de rangement pour les accessoires d'arrimage et de soutien entre le support-plan supérieur et la structure inférieure porte-véhicules.

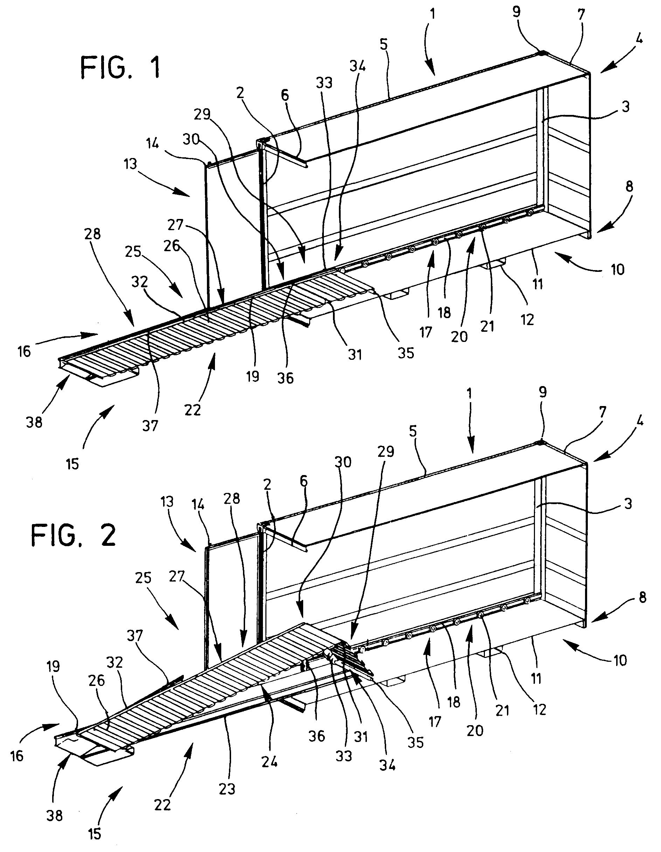

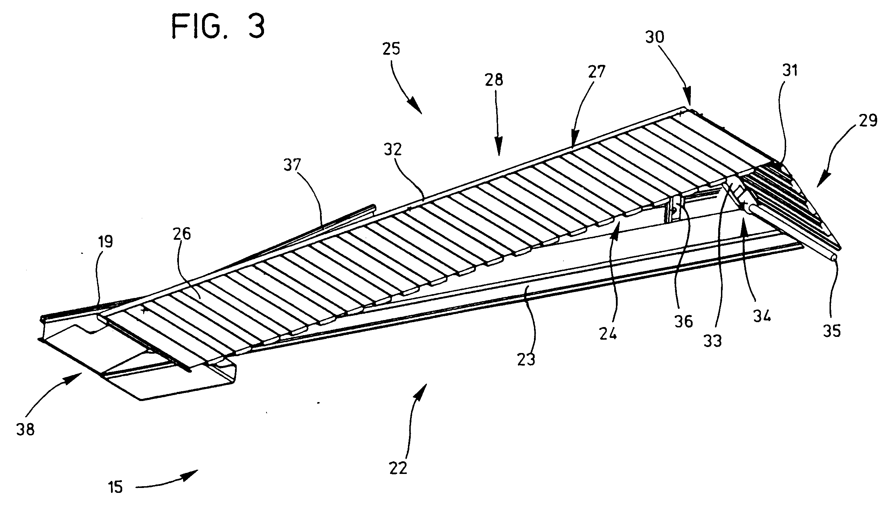

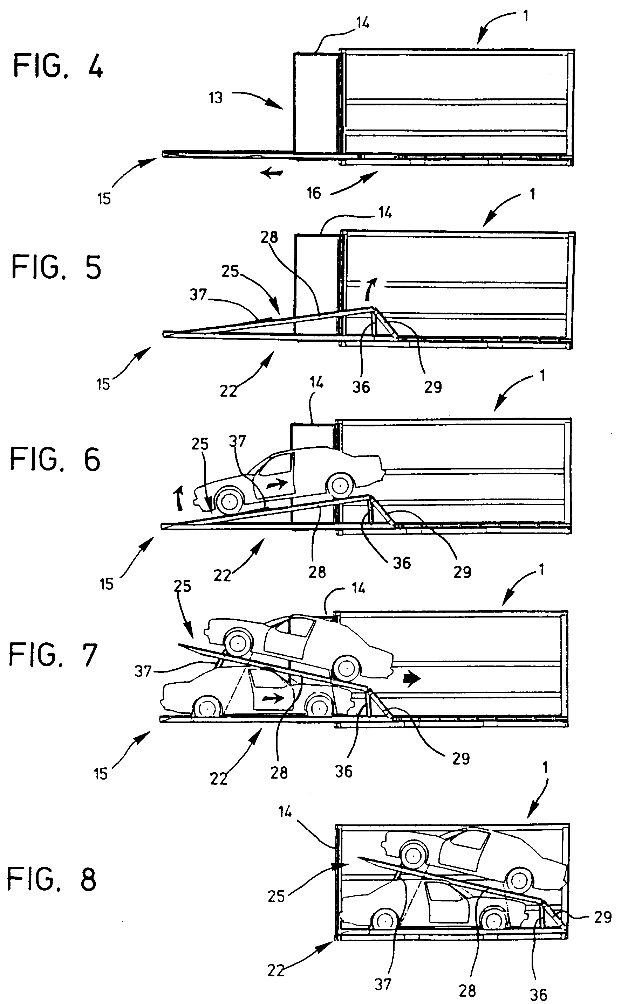

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue générale en perspective du conteneur selon l'invention ouvert par un plan longitudinal médian, son plancher mixte en position sortie ;
. la figure 2 est une vue générale en perspective du conteneur ouvert par un plan longitudinal médian, son plancher mixte en position de première élévation ;
. la figure 3 est une vue en perspective agrandie du plancher mixte en position de première élévation ;
. les figures 4 à 8 sont des vues schématiques en coupe longitudinale montrant la mise en place de la structure porte-véhicules et le chargement.

L'idée générale inventive consiste à prévoir dans un conteneur un plancher mobile mixte permettant de transporter alternativement ou simultanément un ou plusieurs véhicules et des marchandises.

Le plancher double mixte est transformable rapidement par des moyens et des mouvements simples d'un plancher courant en une structure porte-véhicules et inversement.

On décrira l'invention telle qu'appliquée sur un conteneur en tant qu'exemple d'utilisation dans le domaine du transport.

Il est bien entendu que toutes les unités de transport fermées ou ouvertes, mais plus particulièrement celles fermées, sont visées.

Il s'agit, de façon non limitative, de carrosseries amovibles, conteneurs, caisses mobiles, remorques, semi-remorques, wagons, fourgons bâchés ou tôlés et autres unités de transport, par exemple fermées, susceptibles de recevoir à fixation au-dessus de leur fond des glissières ou rails servant de supports en vue du mouvement de translation de l'ensemble.

Pour des raisons de simplification du descriptif, on adoptera un conteneur comme exemple-type d'une unité de transport.

Le conteneur, choisi comme exemple dans le cadre de l'invention, se compose d'une ossature 1 formée de montants tels que 2 et 3 et d'un cadre supérieur 4 lui-même constitué de longerons et de traverses 5,6 et 7. Les montants sont fixés à une base-châssis 8 ou solidaires de celle-ci. Cette base comprend des moyens, normalisés ou non, de fixation au châssis d'un moyen de transport, véhicule ou autre. Il s'agit, par exemple, de pièces de coins telles que 9 normalisées ISO.

Les profilés périmétriques de la base-châssis 8 délimitent un espace intérieur inférieur 10 occupé par un plan inférieur ou fond 11 de conteneur soutenu par des passages de fourche tels que 12. Ce fond constitue le plancher du conteneur sur lequel les marchandises à transporter sont normalement déposées.

L'ossature est protégée contre les intempéries par une couverture latérale et supérieure, formée par exemple de panneaux, ou se trouve bâchée partiellement ou totalement.

La face arrière est occupée par une porte d'accès 13, à battants tels que 14, comme représenté sur les figures.

Au-dessus de la base-châssis 8 du conteneur est montée mobile longitudinalement une unité transformable à plateaux porteurs appelée ci-après plancher double mixte 15, par exemple par des structures porteuses de déplacement en translation telles que 16 du type à glissières 17 formées chacune d'éléments profilés fixes 18 et mobiles 19 se déplaçant les uns dans les autres tout en étant supportés par des moyens de roulement 20, par exemple des galets 21.

Ainsi, le plancher double mixte est mobile en translation entre une position rentrée, à l'intérieur du conteneur, et une position partiellement ou totalement sortie, à l'arrière du conteneur.

Les profilés fixes 18 des glissières 17 sont solidarisés chacun en face l'un de l'autre au niveau de la partie inférieure de la surface latérale du conteneur.

Le conteneur ainsi équipé peut recevoir l'unité fonctionnelle constituée du plancher double mixte porte-véhicules.

Bien entendu, celui-ci est destiné à être monté sur bien d'autres unités de transport, notamment celles fermées.

Ce plancher double mixte est destiné à constituer indifféremment un plancher conventionnel pour le transport de marchandises ou de pièces de rechange, ou une structure porteuse pour deux voitures, ou plus généralement deux véhicules.

On peut envisager également avec le plancher selon l'invention le transport mixte d'un véhicule et de fret.

Le plancher double mixte se compose d'une structure inférieure spécifique appelée plateau porteur inférieur 22 destiné à soutenir un véhicule, sous la forme par exemple de deux chemins de roulement tels que 23, plats ou profilés en "U", ou de deux éléments de platelage solidarisés entre eux ou maintenus solidement par un cadre-châssis 24. Ce dernier présente, le long de ses longerons, les profilés mobiles 19 des glissières 17 en vue de le rendre déplaçable par translation le long de celles-ci.

Le plancher mixte se compose également d'un support-plan supérieur 25 monté articulé et mobile par rapport au plateau porteur inférieur 22.

Le support-plan supérieur 25 est destiné à constituer une surface plane unique de chargement analogue à celle d'un plancher classique pour le transport de marchandises. Dans cette fonction, il couvre à plat le plateau porteur inférieur 22 et est soutenu par celui-ci.

Le support-plan supérieur 25 constitue également un support mobile de chargement, de soutien et de transport d'un véhicule. A cet effet, comme on le verra ci-après, sa longueur dépasse celle des véhicules à transporter.

Comme indiqué, l'ensemble constitue, en position érigée, une structure mobile porte-véhicules à chargement intégré, et en position affaissée à plat, un plancher adapté au transport de marchandises et à la circulation de chariots élévateurs.

Le support-plan supérieur 25 est constitué d'une succession de traverses telles que 26 métalliques ou en bois formant un platelage délimité longitudinalement par deux profilés de bordure tels que 27 en vue de constituer indifféremment un plancher ou une rampe porte-véhicule.

La hauteur des profilés de bordure est supérieure à l'épaisseur des traverses et permet donc de délimiter un espace de rangement entre le support-plan supérieur 25 et le plateau porteur inférieur 22. Cet espace de rangement est utilisé avec profit pour entreposer les accessoires d'arrimage et de soutien.

Le support-plan supérieur 25 formant une rampe porte-véhicule peut être réalisé rigide d'une seule pièce, c'est-à-dire à traverses soutenues sur toute la longueur de la rampe par deux profilés de bordure continus, ou sous la forme de deux rampes dont une rampe porte-véhicule 28 et une rampe d'extrémité 29 reliées entre elles à pivotement de pliage par une articulation de pliage 30 à axe transversal 31 tel que représenté sur les figures.

Dans le mode de réalisation à deux rampes, les profilés de bordure consistent en des éléments distincts tels que 32 et 33 propres à chaque rampe et interrompus au niveau de l'articulation de pliage 30.

La rampe d'extrémité 29 est articulée à son extrémité avant par une liaison pivotante 34, par exemple à tige transversale de jumelage 35 à l'avant du plateau porteur inférieur 22.

La position de l'articulation de pliage 30 entre les deux rampes 28 et 29 est choisie en fonction de la forme d'extrémité avant des modèles actuels les plus courants des véhicules à transporter, dans l'esprit d'optimiser l'espace dégagé en extrémité.

La forme de profil représentée par l'extrémité de la rampe porte-véhicule, l'articulation de pliage et la rampe d'extrémité dans leurs positions inclinées de transport de voitures a pour but de se rapprocher le plus possible de la forme du profil actuel d'extrémité avant des carrosseries les plus courantes actuellement en vue de gagner encore en encombrement. On peut admettre ainsi en position inférieure des voitures ou plus généralement des véhicules dont la longueur totale se rapproche de celle du volume intérieur du conteneur.

Selon la variante à rampe porte-véhicule rigide d'une seule pièce, l'articulation de pliage est une simple articulation de pivotement, convenablement soutenue, réalisant la liaison articulée avec un support double d'appui qui peut s'escamoter à plat, lui-même articulé sur le plateau porteur inférieur 22 pour servir d'appui à la rampe lors de son basculement (variante non représentée).

Le support double d'appui peut consister en deux bras obliques de soutien articulés entre eux et à la rampe par le sommet du triangle formé avec le plateau porteur inférieur au moyen d'une articulation commune ou de même axe (non représenté).

En ce qui concerne la variante de base à deux rampes, l'articulation de pliage 30 est mobile vers le haut sous l'effet de la poussée provoquant la cassure du support-plan suite au cabrage de la rampe porte-véhicule. Cette articulation de pliage 30 est maintenue en position soulevée haute par un moyen de soutien, par exemple par deux appuis procurés par deux jambes de force latérales telles que 36, éventuellement jumelées, escamotables et disposées en regard de part et d'autre du support-plan supérieur 25 sur lequel elles sont articulées, de préférence selon l'axe transversal 31, à pivotement-coulissement ou éventuellement à pivotement simple sans coulissement.

Chacune des jambes de force est montée respectivement selon les deux alternatives précédentes à pivotement simple, c'est à dire non déplaçable, ou à pivotement-coulissement, par exemple le long des longerons du cadre-châssis 24 par son extrémité inférieure, de manière à pouvoir basculer entre une position escamotée dans laquelle elles sont horizontales, couchées vers l'arrière sous le niveau supérieur du support-plan supérieur 25, et une position opérante d'appui de soutien dans laquelle elles se trouvent droites, verticales ou quasi verticales.

On peut envisager également des jambes de force extensibles permettant en principe de se dispenser du pivotement-coulissement au niveau des articulations.

D'autres solutions techniques ou technologiques s'avèrent possibles par des moyens équivalents. L'essentiel consiste à garder la même fonction de soutien en position haute et de basculement en position escamotée le long du support-plan supérieur lorsque celui-ci repose à plat sur le plateau porteur inférieur.

Il est évident que la position droite choisie est celle du meilleur appui possible. Elle ne sera pas toujours verticale, mais plutôt perpendiculaire à la rampe porte-véhicule.

Ce moyen de soutien peut tout aussi bien ne comporter qu'une seule jambe de force sur le côté ou en position médiane ou tout moyen équivalent tel que bielles, bras, béquilles ou autres.

Il faut remarquer que la position escamotée des jambes de force le long du support-plan supérieur ne laisse rien en surépaisseur, c'est-à-dire qu'elles se trouvent en-dessous du niveau supérieur de ce support-plan lorsqu'il est affaissé à plat.

Chaque jambe de force pourra être verrouillée manuellement ou automatiquement en position opérante et la liaison support du plancher verrouillée en position haute.

En variante, différentes positions intermédiaires, en inclinaison des jambes de force et en hauteur du support-plan supérieur, pourront également être verrouillées.

Les jambes de force sont conformées par exemple en glissières, le long desquelles peut coulisser le support-plan supérieur 25 par une liaison pivotante-coulissante au niveau de son extrémité avant afin de rendre l'appui réglable en hauteur.

Dans le mode de réalisation préféré, c'est à dire à support-plan supérieur formé de deux rampes articulées entre elles à pliage, la liaison pivotante ou pivotante-coulissante se situe à l'extrémité de la rampe porte-véhicule 28, son axe étant confondu avec l'axe de l'articulation de pliage 30. Mais les deux axes peuvent également être distincts.

Il convient d'observer ici que dans la variante de base à deux rampes, les profilés de bordure tels que 33 de la rampe d'extrémité jouent le rôle d'étais en reprenant les efforts obliques ou latéraux.

L'extrémité arrière du support-plan supérieur comporte également un moyen de levage et un moyen de soutien indépendants ou combinés sous la forme, par exemple, de deux béquilles telles que 37 montées à pivotement sur le plateau porteur inférieur 22 et conformées par exemple en glissières, le long desquelles coulisse un élément-pivot solidaire au niveau de l'extrémité arrière du support-plan supérieur, ou sous la forme de deux profilés s'emmanchant l'un dans l'autre, le profilé supérieur étant relié de façon articulée à la rampe porte-véhicule.

En position basse du support-plan supérieur 25, ces béquilles viennent basculer pour s'escamoter horizontalement vers l'avant de chaque côté le long de la rampe, ne laissant rien en surépaisseur par rapport au niveau de la surface supérieure du support-plan supérieur. En position levée, elles sont verrouillables en position légèrement inclinée vers l'avant de la rampe, la liaison pivotante-coulissante arrière étant verrouillée à l'extrémité supérieure de chaque béquille.

En variante, différentes positions en inclinaison des béquilles, et différentes positions du support-plan supérieur le long des béquilles, seront verrouillables.

On peut prévoir également un verrouillage automatique selon lequel les béquilles sont verrouillées dans une position ou inclinaison prédéterminée. Il s'agit par exemple de béquilles formées de deux bras articulés qui se verrouillent automatiquement en position de prolongement l'un de l'autre.

D'autres solutions techniques ou technologiques s'avèrent possibles par des moyens équivalents. L'essentiel consiste, comme pour les jambes de force, à garder la même fonction de soutien en position haute et de basculement en position escamotée sous le niveau supérieur du support-plan inférieur lorsque celui-ci repose à plat sur le plateau porteur inférieur.

Les jambes de force 36 d'une part et les béquilles 37 d'autre part pourront comporter des moyens de levage intégrés ou associés, ou bien ces moyens de levage pourront être extérieurs.

De manière préférée, l'extrémité arrière du plateau porteur inférieur comportera un becquet 38 réalisant l'adaptation du décalage en hauteur entre le sol et l'extrémité avant des chemins de roulement supportant le véhicule chargé sur le plateau porteur inférieur.

Le becquet 38 peut affecter différentes formes techniques. Il peut constituer notamment un espace pour le passage et la prise de la fourche d'un chariot-élévateur.

Pour les mêmes raisons de continuité en position de rampe d'accès, les extrémités arrière des profilés de bordure présentent une forme en biseau.

La conformation du support-plan supérieur en une rampe porte-véhicule 28 et une rampe d'extrémité 29 articulées entre elles à pliage par une articulation de pivotement permet d'obtenir une rigidité suffisante en position levée au niveau de l'extrémité avant.

En effet, les efforts verticaux, horizontaux et longitudinaux sont alors repris au niveau des jambes de force 36 d'une part, et par les profilés de bordure de la rampe d'extrémité 29 d'autre part.

Cela est vrai tant dans la position de chargement, extrémité avant levée et extrémité arrière déposée, que dans la position érigée.

Cependant, comme indiqué, on pourra prévoir de ne reprendre les efforts que par le support double d'appui remplaçant les jambes de force dans le cas de la variante selon laquelle le support-plan supérieur est constitué d'une seule pièce.

Au niveau de l'extrémité arrière, les efforts sont repris par les béquilles de soutien 37 après élévation de cette extrémité et basculement de la rampe autour de son articulation de pliage-pivotement.

On notera que le plateau porteur inférieur 22 comporte le long de chacun des longerons de son cadre-châssis 24 des intervalles servant de logements pour les béquilles et jambes de force en position escamotée, ou tout autre moyen, de façon que le support-plan supérieur présente une surface de chargement plane et uniforme équivalente à celle du plancher d'un conteneur.

La transformation du plancher double mixte selon l'invention en unité porte-véhicules s'effectue de la façon suivante.

Le plancher en position à plat occupe, dans la configuration initiale, pratiquement toute la surface inférieure utile du conteneur. Il est exempt de toute surépaisseur et sert alors de plancher classique pour le transport de marchandises.

Une simple poussée longitudinale, par exemple à l'aide d'un chariot élévateur, permet de provoquer le soulèvement incliné de la rampe porte-véhicule (variante à une seule rampe et à support basculant) ou la cassure au niveau de l'articulation de pliage (variante à deux rampes), puis son élévation en position érigée (figures 4 et 5).

La hauteur du sommet peut être ajustable par l'inclinaison ou l'extension des jambes de force ou par le support double d'appui.

Le grand côté sert de rampe-support de montée pour un premier véhicule qui vient se placer sans aide extérieure sur la rampe porte-véhicule.

Un engin de levage extérieur, élévateur ou autre, ou un moyen de levage intégré ou associé aux béquilles, permet alors de provoquer, en levant l'extrémité libre de la rampe porte-véhicule le long des béquilles, le basculement en inclinaison inverse de la rampe, extrémité arrière vers le haut, autour de l'articulation de pliage, en vue de dégager entre le plateau porteur inférieur et la rampe porte-véhicule un espace suffisant pour loger un deuxième véhicule, dans les meilleures conditions d'encombrement, comme indiqué ci-dessus.

La rampe porte-véhicule est maintenue dans cette inclinaison par les béquilles de soutien, par exemple de longueur réglable, et verrouillables en position de soutien.

Des véhicules de différents modèles peuvent ainsi être admis dans les conteneurs courants en exploitant le mieux possible tous les espaces.

On repasse aisément et rapidement de la configuration érigée en triangle à la configuration à plat pour le fret.

Il suffit de dégager le véhicule inférieur, d'incliner l'extrémité arrière de la rampe porte-véhicule jusqu'à la déposer sur le plateau porteur inférieur, de dégager le véhicule supérieur puis d'affaisser le support-plan supérieur par traction vers l'arrière à son extrémité arrière, après avoir déverrouillé l'articulation de pivotement.

Les deux rampes formant le support-plan supérieur s'alignent à l'horizontale en recouvrant pratiquement la totalité du plateau porteur inférieur, les béquilles et jambes de force s'effaçant le long ou sous le support-plan supérieur.

La variante à rampe d'une seule pièce permet d'effectuer un chargement de véhicules dans les mêmes conditions.

Il suffit également d'une simple poussée vers l'avant pour soulever le support double d'appui. Dans cette position, la rampe porte-véhicule est inclinée permettant la montée d'un premier véhicule. La rampe est ensuite basculée en inclinaison inverse, par exemple par un engin élévateur. Elle est maintenue dans cette position par la paire de béquilles de soutien.

La stabilité de l'ensemble porte-véhicules est garantie par les béquilles et les jambes de force ainsi que par la reprise des efforts par la rampe d'extrémité ou par le support double d'appui.

Les verrouillages assurent la sécurité du maintien en position érigée pendant le transport.

## Revendications

1. Structure porteuse transformable du type à deux plans porteurs à incorporer dans une unité de transport par exemple fermée, conteneur, caisse mobile, remorque, ou autre pour le transport alternatif ou mixte de véhicules et de marchandises, caractérisée :
en ce qu'elle comporte sur toute sa longueur un plancher (15) :
. double permettant à lui seul de la transformer en une unité porteuse d'au moins deux véhicules,
. monté mobile en translation longitudinale sur des structures (16) de déplacement faisant partie de l'unité de transport, entre une position rentrée et une position sortie de l'unité de transport ,
. formé d'un plan porteur inférieur (22) et d'une structure supérieure de chargement (25) dont une extrémité est libre,
et en ce que :
la structure supérieure de chargement (25) est ;
. formée d'une rampe relevable porte-véhicule (28) et d'une rampe d'extrémité (29) articulées entre elles,
. mobile par rapport au plan porteur inférieur (22) entre :
. une première position affaissée dans laquelle la structure supérieure de chargement (25) est posée à plat parallèlement au plan porteur inférieur (22) pour le transport de marchandises,
. une deuxième position érigée dans laquelle la structure supérieure de chargement (25) présente deux rampes successives dont d'une part la rampe relevable porte-véhicules (28) permettant l'accès d'un premier véhicule et d'autre part la rampe d'extrémité (29) faisant suite à la rampe porte-véhicule (28),
. une troisième position dans laquelle la rampe porte-véhicule (28) est relevée puis soutient le premier véhicule,
de façon que les deux rampes se succèdent selon deux pentes contraires dans une configuration d'accès à la structure supérieure de chargement (25) et selon deux pentes dans le même sens pour la configuration de transport,
et de façon à dégager en configuration de transport entre la rampe d'extrémité (29) et le plan porteur inférieur (22) un espace disponible pour l'avant ou l'arrière d'un deuxième véhicule supporté par le plan porteur inférieur (22),
et en ce que la structure supérieure de chargement (25) est:
. articulée à pivotement au voisinage de l'extrémité opposée à son extrémité libre de la structure supérieure de chargement (25),
. érigeable en configuration d'accès à la structure supérieure de chargement par un premier moyen moteur ,
. relevable par un deuxième moyen moteur,
. maintenue érigée en configuration d'accès à la structure supérieure de chargement par un premier moyen de soutien,
. maintenue relevée en configuration de transport par un deuxième moyen de soutien.

2. Structure porteuse transformable caractérisée en ce que les premier et deuxième moyens de soutien sont escamotables en position inopérante sous le niveau supérieur de la structure supérieure de chargement (25).

3. Structure porteuse transformable selon la revendication 1 ou 2 caractérisée en ce que la structure supérieure de chargement (25) est formée de traverses (26) constituant un platelage délimité et maintenu par des profilés (27) de bordure, platelage fractionné en deux morceaux pour la position relevée de la structure supérieure de chargement.

4. Structure porteuse transformable selon la revendication 3 caractérisée en ce que les profilés (27) de bordure présentent une épaisseur supérieure à celle des traverses (26) de manière à former un espace disponible entre le plan porteur inférieur (22) et la structure supérieure de chargement (25) lorsque celle-ci est affaissée à plat parallèlement au plateau porteur inférieur (22).

5. Structure porteuse transformable selon l'une des revendications précédentes caractérisée en ce qu'en position relevée, la structure supérieure de chargement (25) est d'une seule pièce sous la forme d'une rampe unique porte-véhicules.

6. Structure porteuse transformable selon l'une des revendications 1 à 4 caractérisée en ce que la rampe porte-véhicule (28) et la rampe d'extrémité (29) formant ensemble la structure supérieure de chargement (25) sont articulées entre elles à pliage par une articulation de pivotement (30), la rampe d'extrémité (29) étant elle-même articulée à pivotement à l'extrémité du plan porteur inférieur (22) opposée à l'extrémité libre.

7. Structure porteuse transformable selon la revendication 1 ou 2 caractérisée en ce que le premier moyen de soutien comprend au moins un support double à deux bras obliques s'affaissant à plat le long du plan supérieur (25).

8. Structure porteuse transformable selon la revendication 1 ou 2 caractérisée en ce que le premier moyen de soutien comprend au moins une ou un couple de jambe(s) de force (36) assurant la liaison articulée entre l'articulation de pivotement (30) et le support porteur inférieur (22) et présentant un débattement en coulissement.

9. Structure porteuse transformable selon l'une des revendications précédentes caractérisée en ce qu'au moins l'un des deux moyens de soutien comporte un moyen intégré ou associé de levage.

10. Structure porteuse transformable selon la revendication 1 caractérisée en ce que le premier moyen moteur est un moyen extérieur.

11. Structure porteuse transformable selon la revendication 1 caractérisée en ce que le deuxième moyen moteur est un moyen extérieur.

12. Structure porteuse transformable selon la revendication 1 ou 10 et 11 caractérisée en ce que les deux moyens moteurs sont confondus.

13. Structure porteuse transformable selon l'une quelconque des revendications précédentes caractérisée en ce que la rampe porte-véhicule (28) est verrouillée en position finale levée ou dans plusieurs positions intermédiaires entre sa position affaissée et sa position relevée.

14. Procédé de chargement de véhicules dans une unité de transport avec la structure porteuse transformable selon l'une quelconque des revendications précédentes, caractérisé en ce que :
. on déplace longitudinalement le plancher (15) le long des structures longitudinales porteuses (16) en sortie de l'unité de transport ;
. on érige la structure supérieure de chargement (25) et on dresse la jambe de force (36) pour former à partir du plancher (15) une rampe porte-véhicules (28) en position inclinée descendante vers le côté d'arrivée du premier véhicule et une rampe d'extrémité (29) de sens contraire ;
. on fait monter le premier véhicule sur la rampe porte-véhicule (28) ;
. on soulève la rampe porte-véhicule (28) et on la relève par le moyen de levage et de soutien pour l'incliner dans l'autre sens et la mettre ainsi en position de transport ;
. on verrouille en position la rampe porte-véhicules (28) ;
. on fait accéder le deuxième véhicule sur le plan porteur inférieur (23) qui avance jusqu'à l'extrémité de jonction de la rampe (29) avec le plan porteur inférieur (23) ;
. on ramène l'ensemble du plancher (15) chargé des deux véhicules en position rentrée à l'intérieur de l'unité de transport le long des structures longitudinales porteuses (16).

## Claims

1. Convertible carrying structure of the type with two carrying surfaces for incorporation in a transportation unit, for example, a closed transportation unit, a container, swap body, trailer or the like, for the transportation of either vehicles or goods, or both together, characterized in that:
it includes, throughout its length, a deck (15) which:
- is double so that, alone, it can convert the unit into a unit for transporting at least two vehicles,
- is mounted for longitudinal translational movement on travelling structures (16) forming part of the transportation unit, between a retracted position in the transportation unit and a position in which it is extracted therefrom,
- is formed by a lower carrying surface (22) and an upper loading structure (25) of which one end is free,
and in that:
the upper loading structure (25):
- is formed by a tilting vehicle-carrying ramp (28) and an end ramp (29), articulated to one another,
- is movable relative to the lower carrying surface (22) between:
- a first, collapsed position in which the upper loading structure (25) is disposed flat, parallel to the lower carrying surface (22) for the transportation of goods,
- a second, raised position in which the upper loading structure (25) has two successive ramps of which, on the one hand, the tilting vehicle-carrying ramp (28) provides access for a first vehicle and, on the other hand, the end ramp (29) continues from the vehicle-carrying ramp (28),
- a third position in which the vehicle-carrying ramp (28) is tilted and supports the first vehicle,
so that the two ramps follow one another along two opposite slopes in a configuration for access to the upper loading structure (25) and along two slopes in the same direction for the transportation configuration, and
so that, in the transportation configuration, a space is left free between the end ramp (29) and the lower carrying surface (22) for the front or the rear of a second vehicle supported by the lower carrying surface (22),
and in that the upper loading structure (25):
- is articulated for pivoting in the vicinity of its end opposite the free end of the upper load structure (25),
- can be raised to the configuration for access to the upper loading structure by a first drive means,
- can be tilted by a second drive means,
- is kept raised in the configuration for access to the upper loading structure by a first support means,
- is kept tilted in the transportation configuration by a second support means.

2. Convertible carrying structure, characterized in that the first and second support means can be retracted to an inoperative position under the upper level of the upper loading structure (25).

3. Convertible carrying structure according to Claim 1 or Claim 2, characterized in that the upper loading structure (25) is formed by cross-members (26) forming a floor delimited and supported by edge profiles (27), the floor being broken into two parts for the tilted position of the upper loading structure.

4. Convertible carrying structure according to Claim 3, characterized in that the edge profiles (27) have a thickness greater than that of the cross-members (26) so as to make a space available between the lower carrying surface (22) and the upper loading structure (25) when the latter is collapsed so as to lie flat parallel to the lower carrying surface (22).

5. Convertible carrying structure according to any one of the preceding claims, characterized in that, in the tilted position, the upper loading structure (25) is in a single piece in the form of a single vehicle-carrying ramp.

6. Convertible carrying structure according to any one of Claims 1 to 4, characterized in that the vehicle-carrying ramp (28) and the end ramp (29) together forming the upper loading structure (25) are articulated to one another for folding by a pivoting articulation (30), the end ramp (29) itself being articulated for pivoting on the opposite end of the lower carrying surface (22) to its free end.

7. Convertible carrying structure according to Claim 1 or Claim 2, characterized in that the first support means comprise at least one double support with two oblique arms which can be collapsed so as to lie flat along the upper platform (25).

8. Convertible carrying structure according to Claim 1 or Claim 2, characterized in that the first support means comprises at least one strut or pair of struts (36) providing the articulated connection between the pivoting articulation (30) and the lower carrying surface (22), and having a range of sliding movement.

9. Convertible carrying structure according to any one of the preceding claims, characterized in that at least one of the two support means includes integral or associated lifting means.

10. Convertible carrying structure according to Claim 1, characterized in that the first drive means is an external means.

11. Convertible carrying structure according to Claim 1, characterized in that the second drive means is an external means.

12. Convertible carrying structure according to Claim 1 or Claims 10 and 11, characterized in that the two drive means are combined.

13. Convertible carrying structure according to any one of the preceding claims, characterized in that the vehicle-carrying ramp (28) is locked in the final raised position or in several intermediate positions between its collapsed position and its raised position.

14. A method of loading vehicles into a transportation unit with the convertible carrying structure according to any one of the preceding claims, characterized in that:
- the deck (15) is moved longitudinally along longitudinal carrying structures (16) out of the transportation unit;
- the upper loading structure (25) is raised and the strut (36) is erected to form, from the deck (15), a vehicle-carrying ramp (28) positioned so as to be inclined downwards towards the side of entry of the first vehicle and an end ramp (29) inclined in the opposite direction;
- the first vehicle is moved up the vehicle-carrying ramp (28);
- the vehicle-carrying ramp (28) is raised and is tilted by the raising and support means so as to be inclined in the other direction and is thus placed in the transportation position;
- the vehicle-carrying ramp (28) is locked in position;
- the second vehicle is moved onto the lower carrying surface (23) and advances to the end at which the ramp (29) is joined to the lower carrying surface (23);
- the unit formed by the deck (15) loaded with the two vehicles is returned to a retracted position inside the transportation unit along the longitudinal carrying structures (16).

## Patentansprüche

1. Verwandelbare Tragstruktur mit zwei Ladeebenen innerhalb einer beispielsweise geschlossenen Transporteinheit, einem Container, **einer Wechselbrücke** einem Anhänger od. dgl. für den alternativen oder gemischten Transport von Fahrzeugen und anderen Gütern, dadurch gekennzeichnet, daß die Struktur auf ihrer gesamten Länge einen Boden (15) aufweist, der
- doppelt ausgebildet ist, damit er allein in eine Trageinheit für zumindest zwei Fahrzeuge umwandelbar ist,
- auf einer zur Transporteinheit gehörenden Verlagerungsstruktur (16) zwischen einer eingefahrenen und einer aus der Transporteinheit ausgefahrenen Stellung in Längsrichtung beweglich ist, und
- durch eine untere Ladeebene (22) und eine obere Ladestruktur (25), deren eines Ende frei ist, gebildet ist,
und daß die obere Ladestruktur (25)
- von einer anhebbaren Fahrzeugtransportrampe (28) und einer Abschlußrampe (29) gebildet ist, welche aneinander angelenkt sind,
- gegenüber der unteren Ladeebene (22) zwischen
- einer ersten abgesenkten Stellung, in der die obere Ladestruktur (25) flach und parallel zur unteren Ladeebene (22) für den Transport von Gütern angeordnet ist,
- einer zweiten aufgerichteten Stellung, in der die obere Ladestruktur (25) zwei Rampen aufweist, von denen einerseits die anhebbare Fahrzeugtransportrampe (28) die Auffahrt eines ersten Fahrzeugs gestattet, andererseits die Abschlußrampe (29) sich an die Fahrzeugtransportrampe (28) anschließt und
- einer dritten Stellung, in der die Fahrzeugtransportrampe (28) angehoben ist und das erste Fahrzeug trägt, dergestalt bewegbar ist, daß
sich die beiden Rampen in zwei entgegengesetzten Schrägen in einer ersten Konfiguration zur Auffahrt auf die obere Ladestruktur (25) und in zwei gleichgerichteten Schrägen für die Transportkonfiguration einander folgen,
und in der Transportstellung zwischen der Abschlußrampe (29) und der unteren Ladeebene (22) ein verfügbarer Raum für die Front oder das Heck eines zweiten von der unteren Ladeebene (22) getragenen Fahrzeugs freigegebenen wird,
und daß die obere Ladestruktur (25)
- in der Nähe des Endes drehbar angelenkt ist, welches dem freien Ende der oberen Ladestruktur (25) gegenüberliegt,
- in die Konfiguration zur Auffahrt auf die obere Ladestruktur durch ein erstes Antriebsmittel aufrichtbar ist,
- durch ein zweites Antriebsmittel anhebbar ist und
- in aufgerichteter Konfiguration für die Auffahrt auf die obere Ladestruktur durch eine erste Halteeinrichtung und in angehobener Transportkonfiguration durch eine zweite Halteeinrichtung gehalten ist.

2. Tragstruktur nach Anspruch 1, dadurch gekennzeichnet, daß die erste und zweite Halteeinrichtung in eine Ruhestellung unterhalb der oberen Ebene der oberen Ladestruktur (25) klappbar sind.

3. Tragstruktur nach Anspruch 1 oder 2, dadurch gekennzeichnet, daß die obere Ladestruktur (25) von Traversen (26) gebildet ist, die eine durch Randprofile (27) gehaltene und begrenzte Bühne bilden, die für die angehobene Stellung der oberen Ladestruktur in zwei Abschnitte geteilt ist.

4. Tragstruktur nach Anspruch 3, dadurch gekennzeichnet, daß die Randprofile (27) eine größere Bauhöhe als die Traversen (26) aufweisen, um einen verfügbaren Raum zwischen der unteren Ladeebene (22) und der oberen Ladestruktur (25) auszubilden, wenn letztere flach und parallel auf die untere Ladeebene (22) abgesenkt ist.

5. Tragstruktur nach einem der vorangehenden Ansprüche, dadurch gekennzeichnet, daß die obere Ladestruktur (25) in angehobener Stellung einteilig in Form einer einzigen Fahrzeugtransportrampe ausgebildet ist.

6. Tragstruktur nach einem der Ansprüche 1 bis 4, dadurch gekennzeichnet, daß die die obere Ladestruktur (25) bildende Fahrzeugtransportrampe (28) und Abschlußrampe (29) durch ein Gelenk (30) aneinander abwinkelbar angelenkt sind, wobei die Abschlußrampe (29) ihrerseits an dem dem freien Ende abgewandten Ende der unteren Ladeebene (22) angelenkt ist.

7. Tragstruktur nach Anspruch 1 oder 2, dadurch gekennzeichnet, daß die erste Halteeinrichtung zumindest einen Doppelträger mit zwei geneigten Armen aufweist, welche sich flach entlang der oberen Ebene (25) absenken.

8. Tragstruktur nach Anspruch 1 oder 2, dadurch gekennzeichnet, daß die erste Halteeinrichtung zumindest eine oder ein Paar Strebe(n) (36) aufweist, welche die gelenkige Verbindung zwischen dem Gelenk (30) und der unteren Ladeebene (22) gewährleistet und eine Gleitauslenkung bietet.

9. Tragstruktur nach einem der vorangehenden Ansprüche, dadurch gekennzeichnet, daß zumindest eine der Halteeinrichtungen eine integrierte oder mit ihr verbundene Hubeinrichtung aufweist.

10. Tragstruktur nach Anspruch 1, dadurch gekennzeichnet, daß die erste Antriebseinrichtung eine externe Einrichtung ist.

11. Tragstruktur nach Anspruch 1, dadurch gekennzeichnet, daß die zweite Antriebseinrichtung eine externe Einrichtung ist.

12. Tragstruktur nach Anspruch 1 oder 10 und 11, dadurch gekennzeichnet, daß die beiden Antriebseinrichtungen zusammengefaßt sind.

13. Tragstruktur nach einem der vorangehenden Ansprüche, dadurch gekennzeichnet, daß die Fahrzeugtransportrampe (28) in ihrer angehobenen Endstellung oder in mehreren Zwischenstellungen zwischen ihrer abgesenkten und ihrer angehobenen Stellung verriegelbar ist.

14. Verfahren zum Verladen von Fahrzeugen in einer Transporteinheit mit einer verwandelbaren Tragstruktur nach einem der vorangehenden Ansprüche, dadurch gekennzeichnet, daß
- der Boden (15) entlang von Längstragstrukturen (16) aus der Transporteinheit heraus längsverlagert wird,
- daß die obere Ladestruktur (25) aufgerichtet und die Strebe (36) aufgestellt wird, um vom Boden (15) aus eine in Richtung der Zufahrtseite des ersten Fahrzeugs abfallend geneigte Fahrzeugtransportrampe (28) und eine entgegengesetzt geneigte Abschlußrampe (29) auszubilden,
- daß das erste Fahrzeug auf der Fahrzeugtransportrampe (28) festgesetzt wird,
- daß die Fahrzeugtransportrampe (28) angehoben und mittels der Hub- und Halteeinrichtung aufgerichtet wird, um sie in die entgegengesetzte Richtung zu neigen und so in Transportstellung zu bringen,
- daß die Fahrzeugtransportrampe (28) in ihrer Position verriegelt wird,
- daß das zweite Fahrzeug auf die untere Ladeebene (22) bis zum Verbindungsende der Rampe (29) mit der unteren Ladeebene (22) gefahren wird und
- daß die mit zwei Fahrzeugen beladene Bodeneinheit (15) ins Innere der Transporteinheit entlang der Längstragstrukturen (16) in eine eingefahrene Stellung zurückgeführt wird.
